# EUROPÄISCHE PATENTSCHRIFT

(11) **EP 1 194 994 B1**
(45) Veröffentlichungstag und Bekanntmachung des Hinweises auf die Patenterteilung: **06.04.2005**
(21) Anmeldenummer: 00935195.8
(22) Anmeldetag: 09.06.2000
(51) Int. Cl.: H02J 17/00, G01R 15/14, B25J 19/00, H01M 8/00, H04B 7/00

(54) **ANORDNUNG ZUR DRAHTLOSEN VERSORGUNG EINER VIELZAHL SENSOREN UND/ODER AKTOREN MIT ELEKTRISCHER ENERGIE, SOWIE SENSOR ODER AKTOR HIERZU**
ASSEMBLY FOR THE WIRELESS SUPPLY OF ELECTRIC ENERGY TO A NUMBER OF SENSORS AND/OR ACTUATORS, AND SENSOR OR ACTUATOR THEREFOR
DISPOSITIF D'ALIMENTATION SANS FIL D'UNE PLURALITE DE CAPTEURS ET/OU D'ACTIONNEURS EN ENERGIE ELECTRIQUE, ET CAPTEUR OU ACTIONNEUR FONCTIONNANT AVEC CE DISPOSITIF

(30) Priorität: 26.06.1999 DE 19929343
(43) Veröffentlichungstag der Anmeldung: 10.04.2002
(73) Patentinhaber: ABB Research Ltd., 8050 Zürich (CH)
(72) Erfinder: SCHEIBLE, Guntram, D-69493 Hirschberg (DE); FUCHS, Jürgen, D-68723 Schwetzingen (DE); GARRELS, Kai, D-68239 Mannheim (DE); BRODTKORB, Dagfin, N-1361 steras (NO); KJESBU, Snorre, N-1341 Siependen (NO)
(74) Vertreter: Miller, Toivo
(86) Internationale Anmeldenummer: PCT/EP2000/005327
(87) Internationale Veröffentlichungsnummer: WO 2001/001545

(56) Entgegenhaltungen:
- DE-A- 4 442 677
- US-A- 5 428 961
- US-A- 5 610 488

## Beschreibung

Die Erfindung bezieht sich auf eine Anordnung zur drahtlosen Versorgung einer Vielzahl Sensoren und/oder Aktoren mit elektrischer Energie, sowie auf einen Sensor oder Aktor hierzu.

Die Erfindung kann beispielsweise zur elektrischen Energieversorgung von Näherungssensoren (bzw. Näherungsschaltern), Temperaturmeßsensoren, Druckmeßsensoren, Strommeßsensoren und Spannungsmeßsensoren bei Industrierobotern, Herstellungsautomaten und Fertigungsautomaten und/oder zur elektrischen Energieversorgung von mikromechanischen, piezoelektrischen, elektrochemischen, magnetostriktiven, elektrostriktiven, elektrostatischen oder elektromagnetischen Aktoren verwendet werden, wie sie in Aktoren-Systemen oder Maschinen, beispielsweise bei Steuer/Regelsystemen, in Fernsteuersystemen, in der Robotertechnik, bei Herstellungsautomaten bzw. Fertigungsautomaten, als Anzeigeelemente und in Schutz- und Sicherheitssystemen (beispielsweise bei Freiluft- oder Innenraum-Schaltanlagen) zum Einsatz gelangen.

Aus der DE 44 42 677 A1 sind ein Verfahren und eine Anordnung zum Versorgen eines elektrischen Verbrauchers mit einer elektrischen Versorgungsspannung oder einem elektrischen Versorgungsstrom bekannt, wobei Funkwellen eines Funksenders zu einem mit dem Verbraucher elektrisch verbundenen Funkempfänger übertragen.werden und vom Funkempfänger in die elektrische Versorgungsspannung bzw. den elektrischen Versorgungsstrom umgewandelt werden. Die Funkwellen können aus dem elektromagnetischen Hochfrequenzbereich (Radiowellen) oder auch aus dem Mikrowellenbereich (Richtfunk) kommen.

Dabei ist es von Nachteil, daß aufgrund der hohen Frequenzen und dementsprechend kleinen Antennen einerseits und der durch EMV-Vorschriften und Regeln für Sicherheit und Gesundheitsschutz an Arbeitsplätzen mit Exposition durch elektrische, magnetische oder elektromagnetische Felder beschränkten zulässigen Sendeleistung andererseits nur sehr unzureichend geringe Abstände zwischen Funksender und Funkempfänger erzielbar sind. Das gleiche trifft für die erzielbaren Leistungen zu, welche im Bereich weniger µW liegen, was meist unzureichend für Aktoren ist.

Der Erfindung liegt die Aufgabe zugrunde, eine kostengünstige und zuverlässige Anordnung zur drahtlosen Versorgung einer Vielzahl Sensoren und/oder Aktoren mit elektrischer Energie anzugeben.

Ferner soll ein hierzu geeigneter Sensor oder Akter vorgeschlagen werden.

Die Aufgabe wird bezüglich des Sensors oder Aktors erfindungsgemäß durch einen Sensor oder Aktor mit einer integrierten Mikro-Brennstoffzelle inklusive Kraftstofftank getöst, welche den getankten Kraftstoff - vorzugsweise Methanol. in elektrische Energie zur Versorgung des Sensors umwandelt.

Die Aufgabe wird bezüglich der Vorrichtung erfindungsgemäß durch eine Anordnung zur drahtlosen Versorgung einer Vielzahl an einer Maschine montierter, erfindungsgemäßer Sensoren und/oder Aktoren mit elektrischer Energie gelöst, wobei in den Sensoren und/oder Aktoren eine Mikro-Brennstoffzelle mit zugehörigem Kraftstofftank integriert ist, welche den getankten Kraftstoff - vorzugsweise Methanol - in elektrische Energie zur Versorgung des Sensors umwandelt.

Vorzugsweise sind die Sensoren und/oder Aktoren mit einer Sendeeinrichtung bzw. Empfangseinrichtung bzw. Sende/Empfangseinrichtung ausgestattet sind, welche über Funksignale mit einer mit einem Prozeßrechner der Maschine verbundenen zentralen Sendeeinrichtung bzw. Empfangseinrichtung bzw. Sende/Empfangseinrichtung kommuniziert.

Für den Einsatz in einem erfindungsgemäßen Sensor oder Aktor ist eine Mikro-Brennstoffzelle beispielsweise aus der WO 98/31062 bzw. PCTUS98/01693 bekannt.

Die mit der Erfindung erzielbaren Vorteile bestehen insbesondere darin, daß im Vergleich zu konventionellen Lösungen mit Kabelanschluß zur elektrischen Energieversorgung der Sensoren und/oder Aktoren der durch Planung, Material, Installation, Dokumentation und Wartung bedingte relativ hohe Kostenfaktor eines Kabelanschlusses entfällt. Es können keine Ausfälle aufgrund von Kabelbrüchen oder schlechten, beispielsweise korrodierten Kontakten auftreten.

Im Vergleich zur Verwendung von Batterien zur Energieversorgung von Sensoren und/oder Aktoren entfällt der Wartungsaufwand und Kostenaufwand, der durch den erforderlichen Austausch von Batterien - zumal an schwer zugänglichen Stellen - bedingt ist. Auch aus Umweltgesichtspunkten weist die Erfindung Vorteile auf, denn sowohl die Mikro-Brennstoffzelle als auch der zur elektrischen Energieerzeugung erforderliche Kraftstoff sind im Hinblick auf Umweltaspekte unkritisch.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Anordnung zur drahtlosen Versorgung einer Vielzahl an einer Maschine montierter Sensoren und/oder Aktoren
- Fig. 2: eine Ausführungsform einer in einem Sensor oder Aktor integrierten Anordnung zur Energieerzeugung.

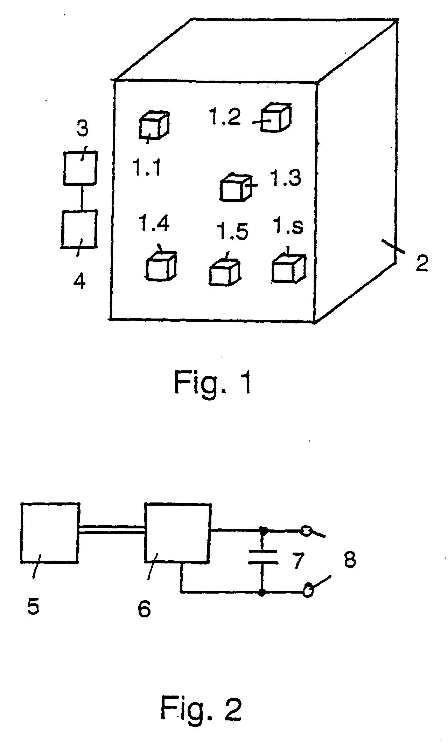

In Fig. 1 ist eine Anordnung zur drahtlosen Versorgung einer Vielzahl an einer Maschine montierter Sensoren und/oder Aktoren dargestellt. Es ist eine Maschine 2 bzw. ein Industrieroboter bzw. Herstellungsautomat bzw. Fertigungsautomat gezeigt, welche mit zahlreichen an unterschiedliche, gegebenenfalls bewegliche Maschinenkomponenten montierten Sensoren und/oder Aktoren 1.1....1.s versehen ist. Als Sensoren dienen insbesondere Näherungssensoren. Des weiteren können beispielsweise Drucksensoren oder Temperatursensoren eingesetzt sein. Als Aktoren 1.1...1.s dienen beispielsweise Anzeigeelemente, Steuer/Regelelemente und Schutz/Sicherheitselemente, wie Motorstarter, Schütze, Sanftanlasser, pneumatische Ventile.

Die Sensoren und/oder Aktoren 1.1 bis 1.s sind mit Sendeeinrichtungen oder Empfangseinrichtungen oder Sende/Empfangseinrichtungen ausgestattet, die beispielsweise Funksignale hinsichtlich der Befehle an die Aktoren zur Ausführung bestimmter Handlungen empfangen und beispielsweise Funksignale hinsichtlich aktueller Sensor-Informationen, wie Rückmeldungen "gewünschte Position erreicht" oder Aktor-Informationen, wie Rückmeldungen "gewünschte Handlung erfolgreich ausgeführt" abgeben.

Die Funksignale zu den Sensoren und/oder Aktoren 1.1 bis 1.s bzw. von den Sensoren und/oder Aktoren 1.1 bis 1.s werden von einer zentralen Sendeeinrichtung bzw. Empfangseinrichtung bzw. Sende/Empfangseinrichtung 3 abgegeben bzw. empfangen und von einem Prozeßrechner 4 (speicherprogrammierbare Steuerung) vorgegeben bzw. an diesen weitergeleitet. Vorzugsweise befindet sich die zentrale Sendeeinrichtung bzw. Empfangseinrichtung bzw. Sende/Empfangseinrichtung 3 in unmittelbarer Nähe der Sensoren und/oder Aktoren 1.1 bis 1.s, um eine optimale Funkverbindung mit den Sensoren und/oder Aktoren zu gewährleisten, während der die Maschine 2 steuernde Prozeßrechner 4 auch entfernt von den Sensoren und/oder Aktoren 1.1 bis 1.s angeordnet sein kann. Der Informationsaustausch zwischen Prozeßrechner 4 und zentraler Sendeeinrichtung bzw. Empfangseinrichtung bzw. Sende/Empfangseinrichtung 3 kann über Funksignale oder über Kabel erfolgen.

Die elektrische Energieversorgung der Sensoren und/oder Aktoren 1.1 bis 1.s erfolgt mittels in den Sensoren und/oder Aktoren integrierte Mikro-Brennstoffzellen, wie dies nachfolgend unter Fig. 2 näher beschrieben ist.

Wie leicht erkennbar ist, ergibt sich durch das vorgeschlagene System eine kabellose Konfiguration der Sensoren und/oder Aktoren 1.1 bis 1.s sowohl hinsichtlich ihrer elektrischen Energieversorgung als auch hinsichtlich der Informationsübertragung von und zur zentralen Sendeeinrichtung bzw. Empfangseinrichtung bzw. Sende/Empfangseinrichtung 3 bzw. vom und zum Prozeßrechner 4.

In Fig. 2 ist eine Ausführungsform einer in einem Sensor oder Aktor integrierten Anordnung zur Energieerzeugung dargestellt. Es ist eine Mikro-Brennstoffzelle 6 zu erkennen, die einerseits an einen vorzugsweise Methanol enthaltenden Kraftstofftank 5 angeschlossen ist und die andererseits Versorgungsklemmen 8 aufweist, an denen elektrische Energie zur Speisung der Sendeeinrichtungen oder Empfangseinrichtungen oder Sende/Empfangseinrichtungen der Sensoren oder Aktoren abgreifbar ist.

Zwischen den Versorgungsklemmen 8 liegt zweckmäßig ein Kondensator 7 oder Akkumulator als Energie-Zwischenspeicher, um einem ungleichförmigen, beispielsweise impulsförmigen Energiebedarf der Sendeeinrichtung bzw. Empfangseinrichtung bzw. Sende/Empfangseinrichtung des Sensors oder Aktors gerecht zu werden.

Der Leistungsbedarf eines Sensors liegt dabei im Bereich einiger zehn µW bis etwa 50 mW, vorzugsweise bei 1 mW. Der Leistungsbedarf eines Aktors liegt im Bereich 1 bis 50 mW.

Das Fassungsvermögen des Kraftstofftanks 5 ist vorzugsweise derart zu bemessen, daß die während der Lebensdauer des Sensors oder Aktors voraussichtlich benötigte elektrische Energie produziert werden kann. Abweichend hiervon ist es jedoch auch möglich, den Kraftstofftank 5 mit Einrichtungen (Ventilen) zu versehen, welche ein nachträgliches Betanken ermöglichen.

Die Mikro-Brennstoffzelle 6 ist vorzugsweise in MEMS-Technologie (MikroElektroMechanisches System) hergestellt.

## Patentansprüche

1. Sensor oder Aktor mit einer integrierten Mikro-Brennstoffzelle (6) inklusive Kraftstofftank (5), welche den getankten Kraftstoff - vorzugsweise Methanol - in elektrische Energie zur Versorgung des Sensors umwandelt.

2. Sensor oder Aktor nach Anspruch 1, **dadurch gekennzeichnet, dass** ein elektrischer Energiespeicher (7) vorgesehen ist.

3. Anordnung zur drahtlosen Versorgung einer Vielzahl an einer Maschine montierter, gemäß Anspruch 1 ausgebildeter Sensoren und/oder Aktoren (1.1 bis 1.s) mit elektrischer Energie, wobei in den Sensoren und/oder Aktoren eine Mikro-Brennstoffzelle (6) mit zugehörigem Kraftstofftank (5) integriert ist, welche den getankten Kraftstoff - vorzugsweise Methanol - in elektrische Energie zur Versorgung des Sensors umwandelt.

4. Anordnung nach Anspruch 3, **dadurch gekennzeichnet, dass** die Sensoren und/oder Aktoren (1.1 bis 1.s) mit einer Sendeeinrichtung bzw. Empfangseinrichtung bzw. Sende/Empfangseinrichtung ausgestattet sind, welche über Funksignale mit einer mit einem Prozessrechner (4) der Maschine (2) verbundenen zentralen Sendeeinrichtung bzw. Empfangseinrichtung bzw. Sende/Empfangseinrichtung (3) kommuniziert

## Claims

1. Sensor or actuator having an integrated micro fuel cell (6) including a fuel tank (5), which converts the fuel in the tank - preferably methanol - into electrical power for supplying the sensor.

2. Sensor or actuator according to Claim 1, **characterized in that** an electrical energy store (7) is provided.

3. Arrangement for wire-free supply of a large number of sensors and/or actuators (1.1 to 1.s), which are mounted on a machine and designed according to Claim 1, with electrical power, with a micro fuel cell (6) with an associated fuel tank (5) being integrated in the sensors and/or actuators, which micro fuel cell (6) converts the fuel in the tank - preferably methanol - into electrical power for supplying the sensor.

4. Arrangement according to Claim 3, **characterized in that** the sensors and/or actuators (1.1. to 1.s) are equipped with a transmitting device or receiving device or transmitting/receiving device, which communicates via radio signals with a central transmitting device or receiving device or transmitting/receiving device (3) which is connected to a process computer (4) for the machine (2).

## Revendications

1. Capteur ou actionneur comprenant une micropile à combustible (6) intégrée, pourvue d'un réservoir de combustible (5), qui transforme le combustible contenu dans le réservoir - de préférence du méthanol - en énergie électrique destinée à alimenter le capteur.

2. Capteur ou actionneur selon la revendication 1, **caractérisé en ce qu'**il est prévu un accumulateur d'énergie électrique (7).

3. Agencement d'alimentation sans fil en énergie électrique d'une pluralité de capteurs et/ou d'actionneurs (1.1 à 1.s) réalisés selon la revendication 1, montés sur une machine, une micropile à combustible (6), avec un réservoir de combustible (5) associé, étant intégrée dans les capteurs et/ou actionneurs, laquelle micropile transforme le combustible contenu dans le réservoir - de préférence du méthanol - en énergie électrique destinée à alimenter le capteur.

4. Agencement selon la revendication 3, **caractérisé en ce que** les capteurs et/ou actionneurs (1.1 à 1.s) sont équipés respectivement d'un dispositif émetteur, d'un dispositif récepteur ou d'un dispositif émetteur/récepteur qui communique par des signaux radio respectivement avec un dispositif émetteur, un dispositif récepteur ou un dispositif émetteur/récepteur central (3) relié à un calculateur industriel (4) de la machine (2).
